# EUROPÄISCHE PATENTSCHRIFT

(11) **EP 1 832 458 B1**
(45) Veröffentlichungstag und Bekanntmachung des Hinweises auf die Patenterteilung: **10.04.2013**
(21) Anmeldenummer: 07003749.4
(22) Anmeldetag: 23.02.2007
(51) Int. Cl.: B60J 7/14

(54) **Konvertierbares Kraftfahrzeug mit versenkbarer Dach-Heckkonstruktion**
Convertible motor vehicle with a foldaway roof boot construction
Véhicule automobile convertissable doté d'une construction de toit descendant

(30) Priorität: 10.03.2006 DE 102006011144
(43) Veröffentlichungstag der Anmeldung: 12.09.2007
(73) Patentinhaber: GM Global Technology Operations LLC, Detroit, MI 48265-3000 (US)
(72) Erfinder: Wetzel, Harald, 63741 Aschaffenburg (DE)
(74) Vertreter: Daniel, Ulrich W.P.

(56) Entgegenhaltungen:
- EP-A- 1 201 496
- EP-A- 1 736 338
- WO-A-2005/077693
- WO-A-2006/084433
- DE-A1- 10 345 123

## Beschreibung

Die Erfindung betrifft eine versenkbare Dach-Heckkonstruktion für ein Kraftfahrzeug. Ein konvertierbares Kraftfahrzeug mit den Merkmalen des Oberbegriffs des Anspruchs 18 sowie ein Verfahren zum Konvertieren eines Kraftfahrzeugs gemäß den Merkmalen des Oberbegriffs des Anspruchs 21.

Das Einsatzgebiet der Erfindung erstreckt sich auf Roadsters, Cabriolets oder kurz Cabrios, welche versenkbare Dach-Heckkonstruktionen verwenden. Dabei dient der hintere Teil des Karosserieabschnitts, insbesondere der Karosserieabschnitt in der Umgebung des Stau- oder Kofferraums, als Deckel für ein versenkbares, mehrteiliges, festes Fahrzeugdach. Daneben lässt sich die vorliegende Erfindung auch anwenden auf Kombifahrzeuge, Mini-Vans und Vans und dergleichen, welche partiell verschiebbare oder versenkbare Dachteile aufweisen.

Aus der DE 103 31 848 A1 ist eine Kraftfahrzeugkarosserie mit einem unteren Karosserieteil und einem faltbaren Dach bekannt, die eine Fahrgastzelle umgeben, wobei das Dach ein Rückfensterteil und ein Dachteil umfasst, das in einem ausgefalteten Zustand einen Zwischenraum zwischen dem Rückfensterteil und einen am unteren Karosserieteil festen Windschutzscheibenfensterteil überbrückt, wobei in einem zusammengefalteten oder auch versenktem Zustand des Dachs das Rückfensterteil über das Dachteil gelegt ist.

Die dort aufgeführte Kraftfahrzeugkarosserie weist den Nachteil auf, dass der Fahrzeugtyp aufgrund des Faltmechanismus zum Versenken der Teile der Fahrzeugkarosserie stets als Cabrio, Roadster oder dergleichen ausgebildet ist und die Bauform nicht entsprechend des jeweiligen Bedarfs des Benutzers anpassbar ist. Insbesondere lässt sich das Kraftfahrzeug nicht an unterschiedliche Situationen anpassen, wie beispielsweise als Kraftfahrzeug für einen Transport sperriger und großer Lasten oder als Freizeit-Kraftfahrzeug bei sonnigem Wetter.

Aus der WO 2005/077693 A1 ist eine Dachstruktur für ein Fahrzeug bekannt. Die Dachstruktur enthält ein hinteres Dachteil, das eine hintere Fahrzeugheckscheibe, seitliche hintere Säulen sowie einen hinteren Abschnitt des Fahrzeugdachs enthält und in Fahrzeuglängsrichtung verschiebbar ist. Ausserdem ein vorderes Dachteil, das angrenzend an einen Windschutzscheiben Rahmen des Fahrzeugs anbringbar ist, aus der Dachstruktur entfernbar ist und dessen Abmessung in Fahrzeuglängsrichtung dem Verschiebeweg des hinteren Dachteils entspricht. Die vorderen Dachteile werden manuell entnommen.

Aufgabe der vorliegenden Erfindung ist es deshalb, eine Dach-Heckkonstruktion bereitzustellen, welche durch Versenken des Kraftfahrzeugdaches und zumindest Teilen des Kraftfahrzeughecks eine Konvertierung eines Kraftfahrzeugmodells in ein anderes ermöglicht, wobei zumindest ein reduzierter Stauraum erhalten bleibt.

Diese Aufgabe wird ausgehend von einer Dach-Heckkonstruktion gemäß Anspruch 1 gelöst. Hinsichtlich eines Kraftfahrzeugs wird die Aufgabe durch Anspruch 18 und hinsichtlich eines Verfahrens zum Konvertieren eines Kraftfahrzeugmodells in ein anderes wird die Aufgabe durch Anspruch 21 gelöst.

Vorteilhafte Weiterbildungen der Erfindung sind in den jeweils rückbezogenen abhängigen Ansprüchen angegeben.

Die Erfindung schließt die technische Lehre ein, dass eine versenkbare Dach-Heckkonstruktion für ein Kraftfahrzeug ein Kraftfahrzeugdach, mit einem vorderen Dachteil, ein mit dem vorderen Dachteil gekoppeltes hinteres Dachteil und ein als Kraftfahrzeugsäule fungierendes, mit dem hinteren Dachteil und einem Kraftfahrzeugrahmen gekoppeltes Dachrahmenteil umfasst. Weiterhin sind Mittel zum Absenken von zumindest Teilen des Kraftfahrzeughecks und des gesamten Kraftfahrzeugdachs im gekoppelten Zustand vorgesehen.

Vorzugsweise ist Kraftfahrzeugheck mehrteilig aufgebaut und besteht aus einem mit dem oberen Dachteil gekoppeltes oberes Heckteil und einem mit dem oberen Heckteil gekoppeltes und mit dem Kraftfahrzeugrahmen gekoppeltes, unteres Heckteil. Dieser Aufbau verbessert die Verstaubarkeit des Kraftfahrzeughecks beim Versenken.

Unter den Begriffen Absenken oder Versenken im Sinne dieser Erfindung ist das Bewegen eines oder mehrerer Teile in einen Bereich zu verstehen, über welchen diese Teile im wesentlichen nicht hervorragen und auch gegenüber benachbart angeordneten Teilen keinen wesentlichen Vorsprung bilden, also etwa bündig angeordnet zu diesen sind. In dieser Erfindung soll mindestens ein Teil des Kraftfahrzeughecks und das Kraftfahrzeugdachs etwa in Höhe des sogenannten Gürtellinie des Kraftfahrzeugs, also in der Kraftfahrzeugkarosserie, versenkt werden bzw. unmittelbar an der Kraftfahrzeugkarosserie abgesenkt anliegen.

Das Kraftfahrzeugdach ist dabei als selbsttragendes Kraftfahrzeugdach ausgebildet und kann demnach auch als Teil der Karosserie aufgefasst werden. Hierbei ist das Kraftfahrzeugdach vorzugsweise aus Blech hergestellt, es kann aber auch andere geeignete Materialien zur Ausbildung eines selbsttragenden Kraftfahrzeugs umfassen, beispielsweise Verbundstoffe, Faserwerkstoffe und dergleichen. Insbesondere Materialien die zur Ausbildung einer Karosserie geeignet sind, sind auch für das Kraftfahrzeugdach verwendbar oder einsetzbar.

Das Kraftfahrzeugdach umfasst im wesentlichen drei Teile: ein vorderes Dachteil, ein hinteres Dachteil und ein Dachrahmenteil. Das vordere Dachteil schließt in dessen vorderen Bereich, d.h. in dem in Richtung Kraftfahrzeugfront befindlichen Bereich mit einer Windschutzscheibenvorrichtung ab. Das vordere Dachteil ist mit dem hinteren Dachteil gekoppelt und liegt mit diesem bündig etwa auf einer Ebene. Diese beiden Teile zusammen bilden im wesentlichen das im wesentlichen horizontal angeordnete Kraftfahrzeugdach des Kraftfahrzeugs. Zur Stützung des vorderen und hinteren Dachteils ist ein Dachrahmenteil vorgesehen. Das Dachrahmenteil ist mit dem hinteren Dachteil gekoppelt und fungiert als Kraftfahrzeugsäule, vorzugsweise als hintere Kraftfahrzeugsäule, weiter bevorzugt als C- oder D-Säule des Kraftfahrzeugs. Weiterhin ist das Dachrahmenteil mit dem Kraftfahrzeugrahmen gekoppelt. Hierdurch ist eine ausreichende Stützung des gesamten Kraftfahrzeugdachs gewährleistet, so dass ein selbsttragendes Kraftfahrzeugdach gebildet ist.

Die Dach-Heckkonstruktion umfasst weiter ein Kraftfahrzeugheck, welches ein oberes Heckteil und ein unteres Heckteil aufweist. Kraftfahrzeugdach und Kraftfahrzeugheck grenzen nach außen den Fahrgastraum und/oder den Stauraum hinter den Sitzreihen zumindest teilweise ab. Um an den Stauraum zu gelangen, ist das Kraftfahrzeugheck so ausgebildet, dass sich zumindest eines seiner Heckteile, bevorzugt beide Heckteile, bewegen lässt bzw. lassen, um einen Zugriff auf den dahinter befindlichen Stauraum zu realisieren. Das obere Heckteil ist mit dem hinteren Dachteil gekoppelt. Das untere Heckteil ist einerseits mit dem Kraftfahrzeugrahmen gekoppelt und lässt sich andererseits mit dem oberen Heckteil koppeln, so dass sich insgesamt ein geschlossenes Heckteil ergibt, wobei oberes Heckteil und unteres Heckteil vorzugsweise bündig abschließen.

Kraftfahrzeugdach und Kraftfahrzeugheck bilden zusammen mit einer Kraftfahrzeugkarosserie eine Abgrenzung eines Fahrgastraums und/oder eines Stauraums. Die Kraftfahrzeugkarosserie weist dabei hintere Seitenwände und Radkästen auf. In dem Fahrgastraum ist vorzugsweise außer einer vorderen Sitzreihe zumindest eine hintere Sitzreihe angeordnet. Alternativ ist in dem Fahrgastraum nur eine einzige Sitzreihe, d.h. ein Fahrersitz und ein Beifahrersitz angeordnet wie zum Beispiel in einem BMW Z3 Coupe. Somit ist die Dach-Heckkonstruktion sowohl in reinen Zweisitzern als auch in Kraftfahrzeugen mit mehr als einer Sitzreihe anwendbar.

Zum Absenken oder Versenken der Dach-Heckkonstruktion sind weiter Mittel zum Absenken von zumindest Teilen des Kraftfahrzeughecks und des gesamten Kraftfahrzeugdachs vorhanden. Kraftfahrzeugdach und Teile des Kraftfahrzeughecks werden dabei im gekoppelten Zustand versenkt, d.h. ohne Trennung einzelner Komponenten voneinander. Hierdurch lässt sich die Dach-Heckkonstruktion zumindest teilweise, bevorzugt aber komplett versenken, d.h. etwa bündig mit einer Gürtellinie abschließend anordnen. Hierdurch ist eine Konvertierung eines Kombis in ein Cabrio realisiert, bzw. umgekehrt eine Konvertierung von einem Cabrio in einen Kombi möglich. Unter Cabrio sind neben zweisitzigen Cabrios - Roadster - auch mehrsitzige Cabrios mit mehr als einer Sitzreihe umfasst.

Bevorzugt ist, dass die Mittel zum Absenken mindestens eine Gelenkeinrichtung zur drehbaren Anordnung zweier benachbarter Komponenten der Dachheckkonstruktion umfassen. Dabei ist die drehbare Anordnung bevorzugt so ausgebildet, dass ein schwenkend um zumindest 0° bis 90°, bevorzugt mindestens 0 ° bis 180°, weiter bevorzugt mindestens 0° bis 270° und am meisten bevorzugt mindestens 0° bis 330° ermöglicht ist.

Unter benachbarten Komponenten versteht man hier insbesondere vorderes und hinteres Dachteil, hinteres Dachteil und Dachrahmenteil, hinteres Dachteil und oberes Heckteil, sowie unteres Heckteil und Kraftfahrzeugrahmen und Dachrahmenteil und Kraftfahrzeugrahmen.

Bevorzugt ist auch, dass der im Fahrzeugrichtung hintere Teil des vorderen Dachteils mit dem vorderen Teil des hinteren Dachteils über mindestens eine erste Gelenkeinrichtung drehbar gekoppelt ist.

Unter vorderem Teil ist der Bereich in Kraftfahrzeugfronrichtung zu verstehen, der an ein benachbartes Teil angrenzt.

Unter hinterem Teil ist entsprechend der in Kraftfahrzeugheckrichtung befindliche Bereich, welcher an mindestens eine weitere Komponente angrenzt, zu verstehen.

Somit bilden vorderer Teil und hinterer Teil zweier benachbarter Komponenten jeweils einen Schnittstellenbereich. An diesem Schnittstellenbereich ist eine Gelenkeinrichtung angeordnet. Diese Gelenkeinrichtung koppelt die beiden benachbarten Komponenten. Die Gelenkeinrichtung ist dabei bevorzugt drehbar bzw. schwenkbar ausgebildet, kann aber beliebig gelenkig ausgebildet sein, beispielsweise translatorisch oder auch als Kombination translatorisch-rotatorisch.

Zudem ist bevorzugt, dass der hintere Teil des hinteren Dachteils mit dem vorderen bzw. oberen Teil des Dachrahmenteils über mindestens eine zweite Gelenkeinrichtung drehbar gekoppelt ist. Über diese zweite Gelenkeinrichtung lässt sich das hintere Dachteil in Relation zu dem Dachrahmenteil verdrehen bzw. verschwenken. Die Gelenkeinrichtung ist dabei so ausgebildet, dass diese im Wesentlichen eine Schwenkung bzw. eine Drehung ermöglicht. Gegebenenfalls ist die Gelenkeinrichtung derart ausgebildet, dass auch eine Translation zumindest in geringem Maße in eine Richtung ermöglicht ist. Auf diese Weise lassen sich die einzelnen Dachteile hinsichtlich ihrer Geometrie flexibel auslegen und ermöglichen ein variables Design.

Bevorzugt ist, dass der hintere bzw. untere Teil des Dachrahmenteils mit dem Kraftfahrzeugrahmen über mindestens eine dritte Gelenkeinrichtung drehbar gekoppelt ist. Hierdurch lässt sich das Dachrahmenteil relativ zu dem Kraftfahrzeugrahmen schwenken.

Unter Kraftfahrzeugrahmen wird allgemein das sogenannte underbody rear, insbesondere das rear Compartment oder auch der Unterbau hinten eines Kraftfahrzeugs verstanden. Dieses umfasst alle Bauteile, bevorzugt tragende Bauteile, die geeignet sind, eine geeignete Stützung des Dachrahmenteils zu gewährleisten. Insbesondere sind hierunter auch der Kraftfahrzeugboden, die Kraftfahrzeugkarosserie, bevorzug die tragende Kraftfahrzeugkarosserie und/oder die Kraftfahrzeugträger sowie die daran unmittelbar angeordneten Komponenten zu fassen.

Weiter bevorzugt ist, dass das obere Heckteil fest mit dem hinten Dachteil und/oder mit dem oberen Teil des Dachrahmenteils gekoppelt ist. Somit lässt sich das obere Heckteil in einem entkoppelten Zustand von dem unteren Heckteil relativ zu dem Dachrahmenteil verdrehen.

Auch bevorzugt ist es, dass das obere Heckteil versenkbar mit dem unteren Heckteil gekoppelt ausgebildet ist. Auf diese Weise lassen sich mögliche Kopplungs- und/oder Abdichtungsprobleme im Bereich der Schnittstelle zwischen oberem und unterem Heckteil umgehen. Dabei weist bevorzugt das untere Heckteil eine Art Schacht auf, in welcher das obere Heckteil, welches bevorzugt als Heckscheibeneinrichtung oder Heckscheibe ausgebildet ist, versenkbar ist.
Bevorzugt ist, dass der untere bzw. hintere Teil des unteren Heckteils gelenkig mit dem Fahrzeugrahmen über mindestens eine vierte Gelenkeinrichtung gekoppelt ist. Hierdurch lässt sich das untere Heckteil nach Art einer Ladeklappe beispielsweise herunterklappen, d.h. in Richtung Kraftfahrzeugboden ausrichten.

Insgesamt bilden die Komponenten von Kraftfahrzeugdach und Kraftfahrzeugheck eine Koppelkette nach Art eines Koppelkurvengetriebes. Die Koppelkette ist dabei so ausgebildet, dass diese sich etwa Z-förmig zusammenfalten lässt und entsprechend auch wieder entfalten lässt.

Bevorzugt ist auch, dass das Dachrahmenteil in Fahrzeugrichtung nach vorne drehbar ausgebildet ist, um über der umgelegten bzw. umgeklappten hinteren Sitzreihe im versenkten Zustand angeordnet zu sein und somit eine Versenkung des Kraftfahrzeugdachs zu ermöglichen.

In einer ersten Ausführungsform ist eine Voraussetzung für eine Konvertierung des Kraftfahrzeugs bzw. ein Versenken der Dach-Heckkonstruktion, dass entweder die hintere Sitzreihe komplett entfernt wird, oder dass die hintere Sitzreihe zusammenklappbar bzw. umklappbar ausgebildet ist und die Rückenstützbereiche der Sitzreihe umgeklappt sind. Diese Ausführungsform umfasst Viersitzer, bei denen der Stauraum nicht so groß ausgebildet ist, dass dieser zur Versenkung der Dach-Heckkonstruktion ausgebildet ist.

Eine andere Ausführungsform umfasst Kombikraftfahrzeuge mit mindestens zwei Sitzreihen und einem Stauraum, der eine Größe aufweist, dass sich das Kraftfahrzeugdach versenken lässt, ohne dass die hintere Sitzreihe umgeklappt, entfernt oder sonst wie verändert werden muss.

Zudem kann eine weitere Ausführungsform Zweisitzer umfassen, bei denen der Stauraum ausgebildet ist, um das Kraftfahrzeugdach aufzunehmen.

Bei allen Ausführungsformen wird die Dach-Heckkonstruktion etwa Z-förmig angeordnet und in dem entsprechenden Stauraum versenkt.

Dadurch, dass zumindest das Dachrahmenteil über den umgeklappten Sitzen der hinteren Sitzreihe angeordnet ist, lässt sich mühelos ein als Vier- oder Mehrsitzer ausgebildetes Kraftfahrzeug in einen Zweisitzer konvertieren.

Weiter bevorzugt ist, dass das hintere Dachteil derart drehbar mit dem Dachrahmen gekoppelt ist, dass bei nach vorne Drehen des Dachrahmens das hintere Dachteil sich in Fahrzeugrichtung nach hinten dreht, um ein Versenken des Kraftfahrzeugdachs zu ermöglichen. Das hintere Dachteil wird demnach in eine entgegengesetzte Richtung zum Kraftfahrzeugrahmenteil gedreht oder verschwenkt.

Zudem ist bevorzugt, dass das vordere Dachteil derart drehbar mit dem Dachrahmen gekoppelt ist, dass bei nach vorne drehen des Dachrahmens und damit verbunden mit dem nach hinten drehen des hinteren Dachteils das vordere Dachteil sich zumindest leicht nach vorne dreht, um im versenkten Zustand auf der Seitenwand über dem hinteren Dachteil aufzuliegen und ein Versenken des Kraftfahrzeugdachs zu ermöglichen.

Das vordere Dachteil wird demnach in Richtung des Fahrzeugrahmenteils und entgegengesetzt zu der Richtung des hinteren Dachteils gedreht oder verschwenkt. Durch diese Art der Drehung behält das vordere Dachteil im wesentlichen seine Orientierung sowohl im zusammengeklappten bzw. versenkten Zustand wie auch im ausgefahrenen Zustand im Wesentliche bei. Insofern bleibt die Dachaußenfläche des vorderen Dachteils weiter so orientiert, dass auch im versenkten Zustand die Außenfläche des vorderen Dachteils nach außen, d.h. nach oben, nicht zum Inneren des Kraftfahrzeugs weist.

Deshalb ist bevorzugt, dass eine äußere Oberfläche des vorderen Dachteils sowohl im versenkten als auch im nicht versenkten Zustand den Fahrgastraum bzw. Stauraum nach außen hin zumindest teilweise begrenzt bzw. abgrenzt.

Um eine Konvertierung von einem Kombi, beispielsweise in ein Cabrio zu ermöglichen, ist es von Vorteil, dass das vordere Dachteil im versenkten Zustand auf der hinteren Seitenwand der Karosserie aufliegt, so dass eine Abdeckung der hinteren Sitzreihe und/oder des Stauraums realisiert ist. Dabei schließt das vordere Dachteil ohne großen Versatz mit den hinteren Seitenwänden der Karosserie ab, so dass sich der Eindruck ergibt, dass es sich um ein abgeschlossenes, vorzugsweise bündig ausgerichtetes Karosserieteil handelt.

Bevorzugt ist zudem, dass im versenkten Zustand Dachrahmenteil, hinteres Dachteil, vorderes Dachteil und unteres Heckteil ein über Öffnen des unteren Heckteil zugreifbaren Stauraum bilden. Somit kann trotz komplett versenktem Kraftfahrzeugdach und teilweise versenktem Kraftfahrzeugheck ein Stauraum erhalten bleiben, der zudem von außen zugänglich ist.

Eine Ausführungsform sieht vor, dass das hintere Dachteil hinsichtlich seiner Breite zumindest teilweise schmaler ausgebildet ist als das vordere Dachteil, um im versenkten Zustand zumindest teilweise zwischen den zwei gegenüberliegenden entsprechenden Radkästen und/oder Seitenwänden unter dem vorderen Dachteil angeordnet zu sein.

Bevorzugt ist zudem, dass das hintere Dachteil hinsichtlich seiner Breite in Richtung Kraftfahrzeugfront sich verjüngend ausgebildet ist, um im versenkten Zustand in Richtung Kraftfahrzeugfront zwischen den zwei gegenüberliegenden entsprechenden Seitenwänden angeordnet zu sein. Das heißt in der Draufsicht auf ein Kraftfahrzeugdach verändert sich die Breite, d.h. die räumliche Ausdehnung in Richtung der Achsen des hinteren Dachteils vom Heck zur Kraftfahrzeugfront verjüngend, d.h. es wird schmaler. Hierdurch lässt sich das hintere Dachteil zwischen den Seitenwänden anordnen und muss nicht oberhalb dieser angeordnet werden, wobei eine möglichst große Fläche von dem hinteren Dachteil abgedeckt wird.

Alternativ kann das hintere Dachteil jede beliebige Form annehmen, um zwischen den Seitenwänden angeordnet zu werden. Wesentlich hierbei ist, dass das hintere Dachteil in seiner Breite zumindest teilweise schmaler als das auf den Seitenwänden aufliegende vordere Dachteil und/oder als der Abstand zwischen den Seitenwänden in dem entsprechenden Bereich ausgebildet ist.

Auch ist bevorzugt, dass das vordere Dachteil entsprechend hinsichtlich seiner Breite zumindest teilweise breiter als das hintere Dachteil ausgebildet ist, um im versenkten Zustand auf den gegenüberliegenden, entsprechenden Seitenwänden aufzuliegen.

Zudem ist es bevorzugt, dass das vordere Dachteil hinsichtlich seiner Breite in Richtung Kraftfahrzeugheck sich verjüngend ausgebildet ist, um im versenkten Zustand in Richtung Kraftfahrzeugfront zwischen den zwei gegenüberliegenden Seitenwänden aufzuliegen.

Durch diese Ausbildung der Dachteile lässt sich eine besonders platzsparende Anordnung realisieren.

Auch bevorzugt ist, dass das Kraftfahrzeugdach und/oder die Seitenwände in Richtung Kraftfahrzeugheck geneigt gegenüber einem Kraftfahrzeugboden ausgebildet ist. Bevorzugt ist, dass das Kraftfahrzeugdach in Richtung Kraftfahrzeugheck abfallend gegenüber einem Kraftfahrzeugboden ausgebildet ist. Weiter bevorzugt ist, dass die Seitenwand ansteigend in Richtung Kraftfahrzeugheck gegenüber einem Kraftfahrzeugboden ausgebildet ist. Auch bevorzugt ist eine Kombination aus abfallendem Dach und ansteigender Seitenwand. Das heißt in Seitenansicht verringert sich einerseits die Höhe des Kraftfahrzeugs bzw. der Abstand zwischen Kraftfahrzeugdach und Kraftfahrzeugboden in Richtung Kraftfahrzeugheck und andererseits vergrößert dich die im Wesentlichen vertikale Seitenfläche der Seitenwand bzw. deren Breite gemessen von Kraftfahrzeugboden bis Fenster.

Eine weitere Alternative ist, dass das Fenster in seiner Höhe nach hinten verjüngend ausgebildet ist, ähnlich wie beim Astra GTC.

Möglich ist auch eine Kombination der zuvor aufgeführten Möglichkeiten. Auf diese Weise ist sichergestellt, dass sich das hintere Seitenfenster komplett in dem Seitenwandbereich versenken lässt.

Hierdurch lässt sich das in diesem Bereich angeordnete Seitenfenster entsprechend in der Karosserie bevorzugt komplett versenken.

Eine andere Ausführungsform sieht vor, dass die Seitenlinie des Kraftfahrzeugs bzw. die Seitenwände entsprechend in Richtung Kraftfahrzeugdach gezogen ausgebildet sind, um eine Verbreiterung der Seitenwände in Richtung Kraftfahrzeugdach zu realisieren. Auch hierdurch lassen sich die in diesem Bereich angeordneten Fenster komplett in den Seitenwänden versenken.

Auch ist eine Kombination aus verbreiterter Seitenwand und abfallendem Kraftfahrzeugdach realisierbar, um die entsprechenden Fenster zu versenken.

Vorzugsweise ist die Gelenkeinrichtung als mindestens um eine Achse drehbare Drehgelenkeinrichtung ausgebildet, umfassend Scharniere und dergleichen. Auf diese Weise ist eine einfach zu realisierende Gelenkeinrichtung herstellbar. Die Gelenkeinrichtung kann dabei eine Drehgelenkreinrichtung wie auch mehrere Drehgelenkeinrichtungen aufweisen. Die Drehgelenkeinrichtungen liegen dabei mit ihren Drehachsen bevorzugt fluchtend auf einer gemeinsamen Drehachse. Je nach Anordnung kann jede Drehgelenkeinrichtung auch eine nicht mit weiteren Drehachsen fluchtende Drehachse aufweisen, wobei dann entsprechende Ausgleichsmechanismen vorgesehen werden müssen. Diese Drehachsen können dann winklig versetzt, sich schneiden oder parallel angeordnet sein. Bevorzugt sind die Drehachsen fluchtend ausgebildet. Dabei kann auch eine gemeinsame Drehachse ausgebildet sein. Bei nur einer Drehgelenkeinrichtung ist diese bevorzugt etwa mittig zwischen den Dachteilen angeordnet. Weiter bevorzugt sind mehrere Drehgelenkeinrichtungen vorgesehen. Diese Drehgelenkeinrichtungen können dann in den Seitenbereichen der Dachteile in der Umgebung der Seitenfläche des Kraftfahrzeugs angeordnet sein. Zudem können bevorzugt zwei Drehgelenkeinrichtungen vorgesehen sein. Bei mehr als einer Drehgelenkeinrichtung können die Drehgelenkeinrichtungen bevorzugt in äquidistanten Abständen zueinander angeordnet sein, jedoch ist auch eine nicht äquidistante Anordnung denkbar.

Zudem ist bevorzugt, dass die Mittel weiter eine Betätigungseinrichtung zum Versenken bzw. Ausfahren der Dach-Heckkonstruktion umfassen. Somit kann über die Betätigungsvorrichtung die Dach-Heckkonstruktion manuell, automatisch oder semiautomatisch versenkt bzw. ausgefahren werden. Aufgrund der Ausbildung der Komponenten der Dach-Heckkonstruktion, welche als selbstragende und stabile Konstruktion ausgelegt ist, lassen sich die Aktuatoren zur Betätigung der Dach-Heckkonstruktion direkt an den Gelenken und/oder an den einzelnen Komponenten anbringen. Die Aktuatoren sind dabei bevorzugt als E-Motoren, pneumatische Motoren und dergleichen ausgebildet.

Bevorzugt ist, das im eingefahrenen Zustand des gesamten Kraftfahrzeugdachs ein reduzierter Stauraum gebildet ist. Dieser Stauraum ist aufgrund der Anordnung des unteren Heckteils von außen zugänglich.

Das Kraftfahrzeug ist als konvertierbares Kraftfahrzeug ausgebildet, umfassend: einen von einer Kraftfahrzeugkarosserie zumindest teilweise begrenzten Fahrgastinnenraum mit mindestens einer Sitzreihe und einem hinter der Sitzreihe angeordneten Stauraum sowie eine erfindungsgemäße versenkbare Dach-Heckkonstruktion. Dabei ist bevorzugt bei vorhandener hinterer Sitzreihe diese als umklappbare hintere Sitzreihe ausgebildet ist, bei der sich zumindest die Rückenstützbereiche der Sitzreihe oder die Rückenlehnen umklappen lassen.

Besonders bevorzugt ist, dass das Kraftfahrzeug bei versenktem Kraftfahrzeugblech ausgebildet ist als Cabrio, Roadster oder dergleichen, also insbesondere auch Zweisitzer. Entsprechend ist es bevorzugt, dass das Kraftfahrzeug bei ausgefahrenem Kraftfahrzeugdach ausgebildet ist als Kombi, Sportswagon, Caravan, Avant oder dergleichen. Hierunter sind allgemein auch Kraftfahrzeuge mit mehr als einer Sitzreihe zu fassen.

Auf diese Weise lassen sich mit der neuartigen erfindungsgemäßen Dach-Heckkonstruktion zwei verschiedene Kraftfahrzeugbauarten realisieren und sich entsprechend den Wünschen des Benutzers ausbilden.

Die technische Lehre umfasst weiter ein Verfahren zum Konvertieren eines als Kombi ausgebildeten Kraftfahrzeugs in ein Cabrio und umgekehrt mit einer Dach-Heckkonstruktion, umfassend die Schritte: optionales Umklappen der hinteren Sitzreihe und Absenken bzw. Ausfahren der Dachheckkonstruktion. Somit lässt sich in wenigen Schritten ein Kraftfahrzeug einer Bauart in ein Kraftfahrzeug einer anderen Bauart umwandeln.

Insbesondere ist bevorzugt, dass der Schritt Absenken die folgenden Schritte umfasst: Drehen des Dachrahmenteils um eine erste Drehrichtung in Richtung Kraftfahrzeugfront und Kraftfahrzeugboden, Drehen des hinteren Dachteils in eine zweite Drehrichtung entgegengesetzt zur ersten Drehrichtung und Drehen des vorderen Dachteils in eine erste Drehrichtung, so dass Dachrahmenteil, hinteres Dachteil und vorderes Dachteil Z-förmig zusammengefaltet angeordnet sind.

Auch bevorzugt ist, dass der Schritt Ausfahren die Schritte umfasst: Drehen des Dachrahmenteils um die zweite Drehrichtung in Richtung Kraftfahrzeugheck und entgegen Kraftfahrzeugboden, Drehen des hinteren Dachteils in die erste Drehrichtung entgegengesetzt zur zweiten Drehrichtung und Drehen des vorderen Dachteils in die zweite Drehrichtung, so dass Dachrahmenteil, hinteres Dachteil und vorderes Dachteil etwa L-förmig angeordnet sind.

Weitere die Erfindung verbessernde Maßnahmen sind in den Unteransprüchen angegeben oder werden nachstehend gemeinsam mit der Beschreibung bevorzugter Ausführungsbeispiele anhand der Figuren näher dargestellt. Es zeigt:
- Fig. 1: eine schematische Seitenansicht eines Kraftfahrzeugs mit versenkbarer Dach-Heckkonstruktion im ausgefahrenen Zustand,
- Fig. 2: eine Draufsicht auf das Kraftfahrzeug gemäß Fig. 1,
- Fig. 3: eine Seitenansicht des Kraftfahrzeugs gemäß Fig. 1 mit der versenkbaren Dach-Heckkonstruktion in einer Position zwischen eingefahrenem bzw. versenktem und ausgefahrenem Zustand,
- Fig. 4: das Kraftfahrzeug gemäß Fig. 1 mit komplett versenkter Dach-Heckkonstruktion,
- Fig. 5: eine Draufsicht auf das Kraftfahrzeug gemäß Fig. 4,
- Fig. 6a bis d: schematisch verschiedene Positionen der versenkbaren Dach-Heckkonstruktion bei einem Kraftfahrzeug von versenktem Zustand bis ausgefahrenem Zustand,
- Fig. 7a bis d: schematisch verschiedene Positionen ausschließlich der Dach-Heckkonstruktion.

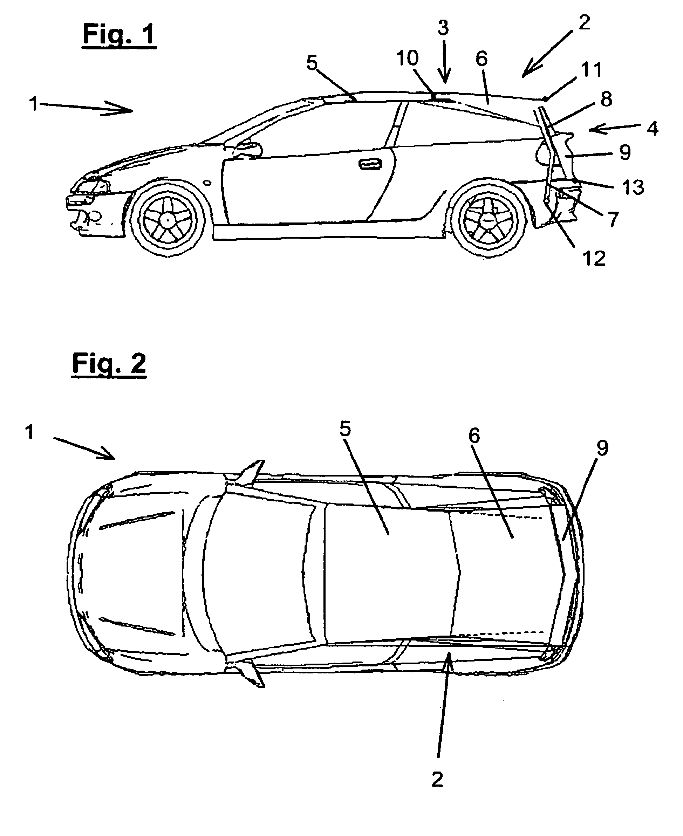

In Fig. 1 ist schematisch eine Seitenansicht eines konvertierbaren Kraftfahrzeugs 1 mit einer erfindungsgemäßen versenkbaren Dach-Heckkonstruktion 2 dargestellt. Die Dach-Heckkonstruktion 2 umfasst ein Kraftfahrzeugdach 3 und ein Kraftfahrzeugheck 4, welche zusammen mit einer Kraftfahrzeugkarosserie mit hinterer Seitenwand und Radkästen zumindest teilweise einen Fahrgastraum mit zumindest einer hinteren Sitzreihe und einem Stauraum nach außen abgrenzt. In der dargestellten Ausführung mit ausgefahrener Dach-Heckkonstruktion 2 ist das Kraftfahrzeug 1 als Kombifahrzeug ausgebildet. Das Kraftfahrzeugdach 3 umfasst weiter ein vorderes Dachteil 5 und ein hinteres Dachteil 6. Zudem weist das Kraftfahrzeugdach 3 einen Kraftfahrzeugrahmen 7 auf. Das Kraftfahrzeugdach 3 mit vorderem Dachteil 5, hinterem Dachteil 6 und Kraftfahrzeugrahmen 7 ist als selbsttragendes Kraftfahrzeugdach 3 ausgebildet, wobei das Dachrahmenteil 7 als C- bzw. D-Säule fungiert und mit dem Kraftfahrzeugrahmen gekoppelt ist. Das Kraftfahrzeugheck 4 umfasst ein oberes Heckteil 8 und ein unteres Heckteil 9. Die einzelnen Komponenten der verwendbaren Dach-Heckkonstruktion 2, genauer des Kraftfahrzeugdachs 3 und des Kraftfahrzeughecks 4 sind miteinander gekoppelt. Dabei ist das vordere Dachteil 5 mit dem hinteren Dachteil 6 über eine erste Gelenkeinrichtung 10 gekoppelt. Das hintere Dachteil 6 ist mit dem Dachrahmenteil 7 über eine zweite Gelenkeinrichtung 11 gekoppelt. Das Dachrahmenteil 7 wiederum ist mit dem Kraftfahrzeugrahmen über eine dritte Gelenkeinrichtung 12 gekoppelt. Schließlich ist das untere Heckteil 9 über eine vierte Gelenkeinrichtung 13 mit dem Kraftfahrzeugrahmen gekoppelt. Alle Komponenten der Dach-Heckkonstruktion 2 bilden somit eine Koppelkette oder auch ein Koppelkurvengetriebe.

Im ausgefahrenen Zustand ist die Dach-Heckkonstruktion 2 etwa L-förmig ausgebildet. Dabei schließt das vordere Dachteil 5, welches im Wesentlichen horizontal, d.h. parallel zum Kraftfahrzeugboden, ausgerichtet ist, mit dem oberen Bereich einer Windschutzscheibe bündig ab.

Der hintere Bereich des vorderen Dachteils 5 schließt ebenfalls bündig mit dem vorderen Bereich des hinteren Dachteils 6 ab. In dem Schnittstellenbereich zwischen dem hinteren Bereich des vorderen Dachteils 5 und dem vorderen Bereich des hinteren Dachteils 6 ist die erste Gelenkeinrichtung 10 ausgebildet. Diese ist vorzugsweise als schwenkbare oder drehbare Gelenkeinrichtung ausgebildet, wobei die erste Gelenkeinrichtung 10 vorzugsweise nach Art eines Scharniers ausgebildet ist. Hierbei kann die Gelenkeinrichtung ein oder mehrere scharnierartige Ausführungsformen annehmen.

Die beiden Dachteile sind so ausgebildet, dass sie in Richtung Kraftfahrzeugheck 4 leicht abfallend angeordnet sind. In dem hinteren Bereich ist das hintere Dachteil 6 über eine zweite Gelenkeinrichtung 11 mit dem Dachrahmenteil 7 gekoppelt. Zudem ist in einem hinteren Bereich auch das obere Heckteil 8 mit dem hinteren Dachteil 6 gekoppelt. Dachrahmenteil 7 und oberes Heckteil 8 sind dabei vorzugsweise drehbar bzw. schwenkbar mit dem hinteren Bereich oder mit hinteren Bereichen des hinteren Dachteils 6 gekoppelt. Dachrahmenteil 7 und oberes Heckteil 8 sind dabei winklig zum hinteren Dachteil 6 ausgerichtet. Das untere Heckteil 9 ist mit dem oberen Heckteil 8 koppelbar und mit dem Kraftfahrzeugrahmen über eine schwenkbare oder drehbare Gelenkeinrichtung gekoppelt. Durch diese Anordnung der beiden Heckteile 8,9 lässt sich durch Aufschwenken der beiden Heckteile 8,9 in entgegengesetzte Drehrichtung ein Zugriff auf den hinter den Heckklappen 8,9 befindlichen Stauraum realisieren. Die Anordnung der Dachteile 5,6 ist insbesondere in Fig. 2 in einer Draufsicht zu sehen.

Fig. 2 zeigt das erfindungsgemäße konvertierbare Kraftfahrzeug 1 schematisch in einer Draufsicht. Das Kraftfahrzeugdach 2 weist das vordere Dachteil 5 und das hintere Dachteil 6 auf. Ebenfalls dargestellt ist das untere Heckteil 9. Das vordere Dachteil 5 ist dabei so ausgebildet, dass es in Richtung Kraftfahrzeugheck sich verjüngend ausgebildet ist, d.h. etwa trapezförmig. Das hintere Dachteil 6 dagegen ist in entgegengesetzte Richtung, d.h. in Richtung Kraftfahrzeugfront, sich verjüngend ausgebildet, auch etwa nach Art eines Trapezes. Durch diese Anordnung lässt sich das Kraftfahrzeugdach im versenkten - und somit zusammengelegten oder zusammengefalteten Zustand - zwischen den Radkästen der Kraftfahrzeugkarosserie anordnen.

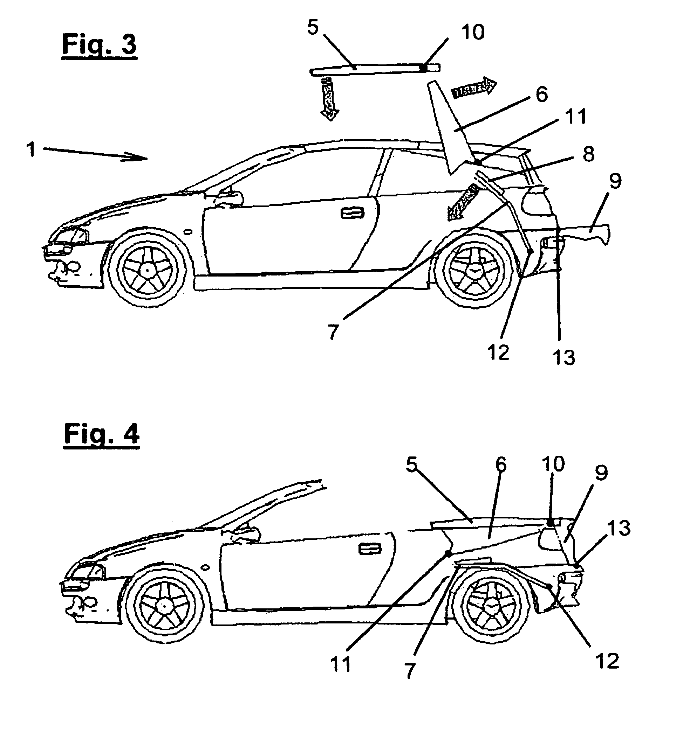

Fig. 3 zeigt schematisch das konvertierbare Kraftfahrzeug 1 gemäß Fig. 1, wobei zusätzlich die Komponenten der Dach-Heckkonstruktion in einer Zwischenposition zwischen versenktem Zustand und ausgefahrenem Zustand dargestellt sind. Die Pfeile zeigen jeweils eine Drehrichtung an. Zum Versenken der Dach-Heckkonstruktion ist zunächst das Dachrahmenteil 7 um die dritte Gelenkeinrichtung 12 Richtung Kraftfahrzeugboden geschwenkt. Das obere Heckteil 8 ist dabei parallel zu dem korrespondierenden Teil des Dachrahmenteils 7 angeordnet. Über die zweite Gelenkeinrichtung 11 sind Dachrahmenteil 7 und hinteres Dachteil 6 so gekoppelt, dass bei einer Schwenkbewegung des Dachrahmenteils 7 in Richtung Kraftfahrzeugboden das hintere Dachteil 6 in entgegengesetzte Richtung, d.h. in Richtung Kraftfahrzeugheck verschwenkt wird. Das vordere Dachteil 5 ist wiederum mit dem hinteren Dachteil 6 über die erste Gelenkeinrichtung 10 so gekoppelt, dass das vordere Dachteil 5 in entgegengesetzte Richtung zu dem hinteren Dachteil 6 verschwenkbar ist. Auf diese Weise lässt sich das Kraftfahrzeugdach zusammenfalten oder Z-förmig ausrichten.

Zur Versenkung der Dach-Heckkonstruktion ist das untere Heckteil 9 über die vierte Gelenkeinrichtung 13 in eine geöffnete Position verschwenkt. Den versenkten Zustand zeigt Fig. 4.

Fig. 4 zeigt schematisch eine Seitenansicht des Kraftfahrzeugs gemäß Fig. 1, wobei die Dach-Heckkonstruktion in einem versenkten Zustand dargestellt ist. Hierbei ist das Dachrahmenteil 7 so weit um die dritte Gelenkeinrichtung 12 verschwenkt oder gedreht, so dass das Dachrahmenteil 7 etwa am Kraftfahrzeugrahmen angeordnet ist. Das hintere Dachteil 6 ist jetzt nahezu um 180° um die zweite Gelenkeinrichtung 11 in entgegengesetzte Richtung zu dem Dachrahmenteil 7 verschwenkt oder gedreht und schließt mit dem Dachrahmenteil 7 einen reduzierten Stauraum ein. Das vordere Dachteil 5 ist über die erste Gelenkeinrichtung 10 so mit dem hinteren Dachteil 6 gekoppelt, dass es nahezu in der gleichen Ausrichtung wie in ausgefahrenem Zustand ausgerichtet ist und auf der Seitenwand aufliegt, um eine Abdeckung nach außen zu gewährleisten. Das untere Heckteil 9 ist um die vierte Dreheinrichtung 13 in eine verschlossene Position 9 verschwenkt, welche mit den Dachteilen 5,6 abschließt. In diese Anordnung schließen die Teile der Dach-Heckkonstruktion bündig mit der Karosserie des Kraftfahrzeugs ab und bilden so die Außenhülle im Heckbereich des Kraftfahrzeugs.

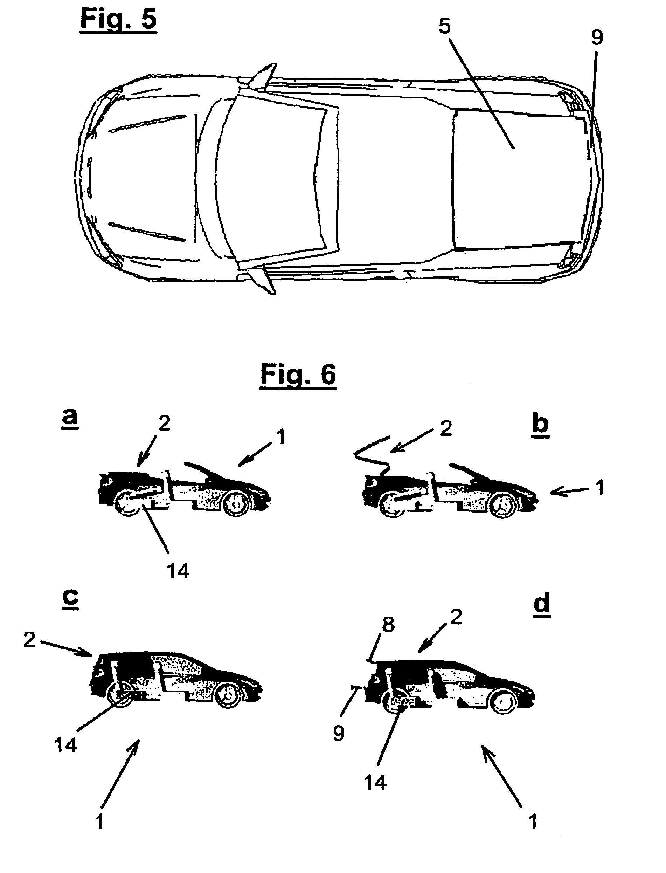

Fig. 5 zeigt schematisch eine Draufsicht auf das erfindungsgemäße Fahrzeug in geöffnetem Zustand gemäß Fig. 1, wobei deutlich wird, dass das vordere Dachteil 5 und das untere Heckteil 9 die Außenhülle der Karosserie bilden und die übrigen Teile der Dach-Heckkonstruktion bedecken.

Fig. 6a bis d zeigt verschiede Stufen beim Ausfahren der versenkbaren Dach-Heckkonstruktion 2 in Bezug auf das Kraftfahrzeug. Fig. 6a zeigt das konvertierbare Kraftfahrzeug 1 schematisch in einer Seitenansicht mit der versenkbaren Dach-Heckkonstruktion 2 in einer versenkten Position. In dieser Position ist die hintere Sitzreihe 14 umgeklappt, d.h. der Rückenstützbereich ist auf die Sitzfläche der hinteren Sitzreihe 14 umgeklappt oder über dieser angeordnet. Hierbei deckt die Dach-Heckkonstruktion 2 den hinteren Bereich des Fahrgastinnenraums und Teile der hinteren Sitzreihe ab.

Fig. 6b zeigt nun eine erste Position der Dach-Heckkonstruktion 2 zwischen versenktem Zustand und ausgefahrenen Zustand. Hierbei entfaltet sich die Dach-Heckkonstruktion 2 nach Art eines Z.

In Fig. 6c schließlich ist die versenkbare Dach-Heckkonstruktion 2 komplett ausgefahren und im wesentlichen L-förmig ausgebildet. Die hintere Sitzreihe 14 kann wieder ausgeklappt werden, d.h. der Stützbereich für den Rücken bzw. die Rückenlehne kann in eine aufrechte Position gebracht werden.

Fig. 6d zeigt, dass im eingefahrenen Zustand das obere und das untere Heckteil 8,9 der Dach-Heckkonstruktion 2 jeweils in entgegengesetzte Richtung aufklappbar sind, um einen Zugriff auf den Stauraum oder den Fahrzeuginnenraum des konvertierbaren Kraftfahrzeugs 1 zu gewähren.

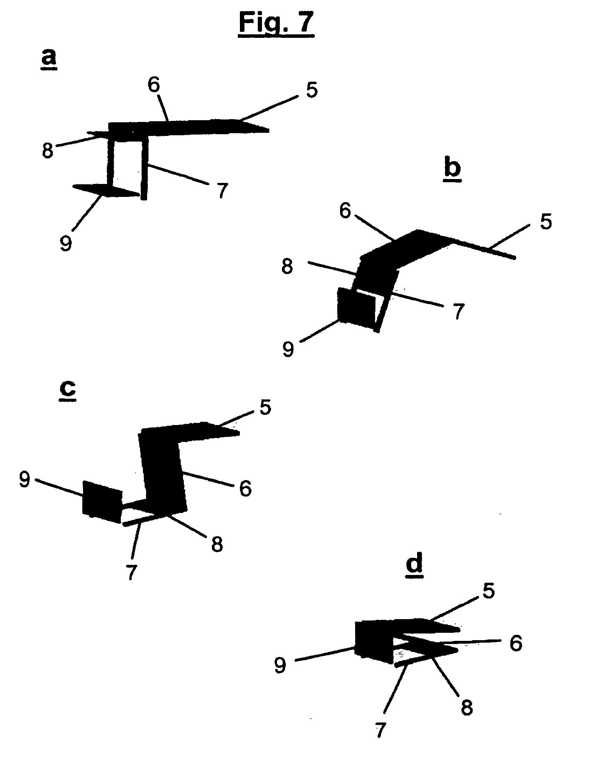

Fig. 7a bis d zeigt noch einmal die verschiedenen Positionen der versenkbaren Dach-Heckkonstruktion.

Fig. 7a zeigt schematisch die Anordnung der Dach-Heckkonstruktion gemäß Fig. 6d. Hierbei sind oberes und unteres Heckteil 8,9 aufgeklappt und gewähren durch das Dachrahmenteil 7 einen Zugriff auf den Fahrgastinnenraum, welcher nach oben durch das vordere Dachteil 5 und das hintere Dachteil 6 zudem begrenzt wird. Vorderes Dachteil 5 und hinteres Dachteil 6 schließen bündig und im Wesentlichen horizontal, d.h. parallel zum Kraftfahrzeugboden ausgerichtet ab.

Fig. 7b zeigt einen ersten Zwischenzustand zwischen ausgefahrenem und versenktem Kraftfahrzeugdach, wobei das untere Heckteil 9 geöffnet ist und das obere Heckteil 8 parallel zum Dachrahmenteil 7, d.h. verschlossen angeordnet ist. Das Dachrahmenteil 7 ist dabei um einen Winkel in Richtung Kraftfahrzeugboden verschwenkt. Vorderes Dachteil 5 und hinteres Dachteil 6 sind in etwa v-förmig zueinander angeordnet.

In Fig. 7c ist eine weitere Zwischenstufe zwischen versenkter und ausgefahrener Position der Dach-Heckkonstruktion dargestellt. Das untere Heckteil 9 ist immer noch geöffnet dargestellt. Das Dachrahmenteil 7 ist nun etwa am Kraftfahrzeugrahmen angeordnet und ist im Wesentlichen horizontal, d.h. parallel zum Kraftfahrzeugboden ausgerichtet. Entsprechend ausgerichtet ist auch das obere Heckteil 8. Vorderes Dachteil 5, hinteres Dachteil 6 und Dachrahmenteil 7 sind nun etwa Z-förmig ausgebildet, wobei das hintere Dachteil 6 in Richtung Kraftfahrzeugheck, d.h. entgegengesetzt zur Drehrichtung des Dachrahmenteils 7, verschwenkt ist. Das vordere Dachteil 5 dagegen ist im Wesentlichen zu seiner Ausgangsposition ausgerichtet und wird allenfalls entgegengesetzt zum hinteren Dachteil 6 verschwenkt.

Fig. 7d zeigt die kompakte Anordnung der versenkbaren Dach-Heckkonstruktion im eingefahrenen, d.h. versenkten Zustand. Das untere Heckteil 9 ist nun verschlossen, bzw. verschließt den Stauraum. Vorderes Dachteil 5, hinteres Dachteil 6 und Dachrahmenteil 7 sind kompakt Z-förmig angeordnet. Dachrahmenteil 7 und hinteres Dachteil 6 bilden dabei eine Begrenzung des Stauraums. Vorderes Dachteil 5 und unteres Heckteil 9 bilden die Grenze bzw. Abgrenzung nach außen und schließen bündig mit der Fahrzeugkarosserie ab.

### Bezugszeichenliste

- **1**: Konvertierbares Kraftfahrzeug
- **2**: Versenkbare Dach-Heckkonstruktion
- **3**: Kraftfahrzeugdach
- **4**: Kraftfahrzeugheck
- **5**: Vorderes Dachteil
- **6**: Hinteres Dachteil
- **7**: Dachrahmenteil
- **8**: Oberes Heckteil
- **9**: Unteres Heckteil
- **10**: Erste Gelenkeinrichtung
- **11**: Zweite Gelenkeinrichtung
- **12**: Dritte Gelenkeinrichtung
- **13**: Vierte Gelenkeinrichtung
- **14**: Hintere Sitzreihe

## Patentansprüche

1. Versenkbare Dach-Heckkonstruktion (2) für ein Kraftfahrzeug (1) umfassend:
ein Kraftfahrzeugdach (3), mit
einem vorderen Dachteil (5),
ein mit dem vorderen Dachteil (5) gekoppeltes hinteres Dachteil (6) und
ein als Kraftfahrzeugsäule fungierendes, mit dem hinteren Dachteil (6) und einem Kraftfahrzeugrahmen gekoppeltes Dachrahmenteil (7),
sowie ein Kraftfahrzeugheck (4),
wobei Mittel zum Absenken von zumindest Teilen des Kraftfahrzeughecks (4) und des gesamten Kraftfahrzeugdachs (3) im gekoppelten Zustand vorgesehen sind.

2. Versenkbare Dach-Heckkonstruktion (2) nach Anspruch 1,
**dadurch gekennzeichnet, dass**
das Kraftfahrzeugheck (4) ein mit dem hinteren Dachteil (6) gekoppeltes oberes Heckteil (8) und
ein mit dem oberen Heckteil (8) koppelbares und mit dem Kraftfahrzeugrahmen gekoppeltes, unteres Heckteil (9) umfasst.

3. Versenkbare Dach-Heckkonstruktion (2) nach Anspruch 1,
**dadurch gekennzeichnet, dass**
die Mittel als Gelenkeinrichtung (10, 11, 12, 13) zur drehbaren Anordnung zweier benachbarter Komponenten der versenkbaren Dach-Heckkonstruktion (2) ausgebildet sind.

4. Versenkbare Dach-Heckkonstruktion (2) nach Anspruch 1,
**dadurch gekennzeichnet, dass**
das obere Heckteil (8) fest mit dem hinteren Dachteil und/oder mit dem oberen Teil des Dachrahmenteils (7) gekoppelt ist.

5. Versenkbare Dach-Heckkonstruktion (2) nach Anspruch 1,
**dadurch gekennzeichnet, dass**
das obere Heckteil (8) versenkbar mit dem unteren Heckteil (9) gekoppelt ist.

6. Versenkbare Dach-Heckkonstruktion (2) nach Anspruch 1,
**dadurch gekennzeichnet, dass**
das Dachrahmenteil (7) in Fahrzeugrichtung nach vorne drehbar ausgebildet ist, um über der umgelegten/umgeklappten hinteren Sitzreihe im versenkten Zustand angeordnet zu sein und eine Versenkung des Kraftfahrzeugdachs (3) zu ermöglichen.

7. Versenkbare Dach-Heckkonstruktion (2) nach Anspruch 1,
**dadurch gekennzeichnet, dass**
das hintere Dachteil (6) derart drehbar mit dem Dachrahmenteil (7) gekoppelt ist, dass bei nach vorne Drehen des Dachrahmenteils (7) das hintere Dachteil (6) sich in Fahrzeugrichtung nach hinten dreht, um ein Versenken des Kraftfahrzeugdachs (3) zu ermöglichen.

8. Versenkbare Dach-Heckkonstruktion (2) nach Anspruch 1
**dadurch gekennzeichnet, dass**
das vordere Dachteil (5) derart drehbar mit dem Dachrahmenteil (7) gekoppelt ist, dass bei nach vorne Drehen des Dachrahmenteils (7) und damit verbunden dem nach hinten Drehen des hinteren Dachteils (6) das vordere Dachteil (5) sich nach vorne dreht, um im versenkten Zustand auf der Seitenwand über dem hinteren Dachteil (6) aufzuliegen und ein Versenken des Kraftfahrzeugdachs (3) zu ermöglichen.

9. Versenkbare Dach-Heckkonstruktion (2) nach Anspruch 1
**dadurch gekennzeichnet, dass**
eine äußere Oberfläche des vorderen Dachteils (5) sowohl im versenkten als auch im nicht versenkten Zustand den Fahrgastraum bzw. Stauraum nach außen begrenzt.

10. Versenkbare Dach-Heckkonstruktion (2) nach Anspruch 1,
**dadurch gekennzeichnet, dass**
das vordere Dachteil (5) im versenkten Zustand auf der hinten Seitenwand aufliegt, so dass eine Abdeckung der hinteren Sitzreihe und/oder des Stauraums realisiert ist.

11. Versenkbare Dach-Heckkonstruktion (2) nach Anspruch 1,
**dadurch gekennzeichnet, dass**
im versenkten Zustand Dachrahmenteil (7), hinteres Dachteil (6), vorderes Dachteil (5) und unteres Heckteil (9) einen über Öffnen des untern Heckteils (9) zugreifbaren Stauraum bilden.

12. Versenkbare Dach-Heckkonstruktion (2) nach Anspruch 1,
**dadurch gekennzeichnet, dass**
das hintere Dachteil (6) hinsichtlich seiner Breite zumindest teilweise schmaler ausgebildet ist als das vordere Dachteil, um im versenktem Zustand zumindest teilweise entsprechend zwischen den gegenüberliegenden Radkästen und/oder Seitenwänden unter dem vorderen Dachteil angeordnet zu sein.

13. Versenkbare Dach-Heckkonstruktion (2) nach Anspruch 1,
**dadurch gekennzeichnet, dass**
das hintere Dachteil (6) hinsichtlich seiner Breite in Richtung Kraftfahrzeugheck (4) sich verjüngend ausgebildet ist, um im versenkten Zustand in Richtung Kraftfahrzeugfront zwischen den gegenüberliegenden Seitenwänden angeordnet zu sein.

14. Versenkbare Dach-Heckkonstruktion (2) nach Anspruch 1,
**dadurch gekennzeichnet, dass**
das vordere Dachteil (5) hinsichtlich seiner Breite zumindest teilweise breiter als das hintere Dachteil ausgebildet ist, um im versenktem Zustand auf den gegenüberliegenden, entsprechenden Seitenwänden aufzuliegen.

15. Versenkbare Dach-Heckkonstruktion (2) nach Anspruch 1,
**dadurch gekennzeichnet, dass** das vordere Dachteil (5) hinsichtlich seiner Breite in Richtung Kraftfahrzeugheck (4) zumindest teilweise sich verjüngend ausgebildet ist, um im versenktem Zustand in Richtung Kraftfahrzeugfront auf den gegenüberliegenden entsprechenden Seitenwänden aufzuliegen.

16. Versenkbare Dach-Heckkonstruktion (2) nach Anspruch 1,
**dadurch gekennzeichnet, dass**
das Kraftfahrzeugdach (3) und/oder die Seitenwände in Richtung Kraftfahrzeugheck (4) geneigt gegenüber einem Kraftfahrzeugboden ausgebildet ist bzw. sind.

17. Versenkbare Dach-Heckkonstruktion (2) nach Anspruch 3,
**dadurch gekennzeichnet, dass**
eine Betätigungsvorrichtung mit der Gelenkeinrichtung (10, 11, 12, 13) zusammenwirkende zum Versenken bzw. Ausfahren der Dach-Heckkonstruktion (2) vorgesehen ist.

18. Konvertierbares Kraftfahrzeug (1) umfassend:
einen von einer Kraftfahrzeugkarosserie zumindest teilweise begrenzten Fahrgastinnenraum mit mindestens einer Sitzreihe und einem hinter der Sitzreihe angeordneten Stauraum sowie eine versenkbare Dach-Heckkonstruktion (2) nach einem der Ansprüche 1 bis 17.

19. Konvertierbares Kraftfahrzeug (1) nach Anspruch 18,
**dadurch gekennzeichnet, dass**
das Kraftfahrzeug bei versenktem Kraftfahrzeugdach (3) nach Art eines Cabrios oder Roadsters ausgebildet ist.

20. Konvertierbares Kraftfahrzeug (1) mit einer Dach-Heckkonstruktion (2) Anspruch 1,
**dadurch gekennzeichnet, dass**
das Kraftfahrzeug (1) bei ausgefahrenem Kraftfahrzeugdach (3) nach Art eines Kombis oder Sportswagons ausgebildet ist.

21. Verfahren zum Konvertieren eines als Kombi ausgebildetes Kraftfahrzeug (1) in ein Cabrio und umgekehrt mit einer Dach-Heckkonstruktion (2) nach einem der Ansprüche 1 bis 17,
umfassend die Schritte:
Umklappen der hinteren Sitzreihe
Absenken oder Ausfahren der Dach-Heckkonstruktion (2).

22. Verfahren nach Anspruch 21, wobei der Schritt Absenken die folgenden Schritte umfasst:
Drehen des Dachrahmenteils (7)in eine Drehrichtung in Richtung Kraftfahrzeugfront und Kraftfahrzeugboden,
Drehen des hinteren Dachteils (6) in eine zweite Drehrichtung entgegengesetzt zur ersten Drehrichtung und
Drehen des vorderen Dachteils (5) in eine erste Drehrichtung, so dass Dachrahmenteil (7), hinteres Dachteil (6) und vorderes Dachteil (5) etwa Z-förmig zusammengefaltet angeordnet werden.

23. Verfahren nach Anspruch 21, wobei der Schritt Ausfahren die Schritte umfasst:
Drehen des Dachrahmenteils (7) um die zweite Drehrichtung in Richtung Kraftfahrzeugheck (4) und entgegen Kraftfahrzeugboden,
Drehen des hinteren Dachteils (6) in die erste Drehrichtung entgegengesetzt zur zweiten Drehrichtung und
Drehen des vorderen Dachteils (5) in die zweite Drehrichtung, so dass Dachrahmenteil (7), hinteres Dachteil (6) und vorderes Dachteil (5) etwa L-förmig angeordnet sind.

## Claims

1. A retractable roof-rear construction (2) for a motor vehicle (1), comprising:
a vehicle roof (3) with a front roof part (5),
a rear roof part (6) which is coupled with the front roof part (6), and
a roof frame part (7) which acts as a vehicle pillar and is coupled with the rear roof part (6) and a vehicle frame,
and a vehicle rear (4), with means being provided for lowering at least parts of the vehicle rear (4) and the entire vehicle roof (3) in the coupled state.

2. A retractable roof-rear construction (2) according to claim 1, **characterized in that** the vehicle rear (4) comprises an upper rear part (8) which is coupled with the rear roof part (6) and a bottom rear part (9) which is coupled with the vehicle frame.

3. A retractable roof-rear construction (2) according to claim 1, **characterized in that** the means are arranged as a joint device (10, 11, 12, 13) for the rotatable arrangement of two adjacent components of the retractable roof-rear construction (2).

4. A retractable roof-rear construction (2) according to claim 1, **characterized in that** the upper rear part (8) is rigidly coupled with the rear roof part and/or with the upper part of the roof frame part (7).

5. A retractable roof-rear construction (2) according to claim 1, **characterized in that** the upper rear part (8) is rectratably coupled with the bottom rear part (9).

6. A retractable roof-rear construction (2) according to claim 1, **characterized in that** the roof frame part (7) is arranged to be forwardly rotatable in the direction of the vehicle in order to be arranged above the folded rear row of seats in the retracted state and to enable a retraction of the vehicle roof (3).

7. A retractable roof-rear construction (2) according to claim 1, **characterized in that** the rear roof part (6) is rotatably coupled with the roof frame part (7) in such a way that when the roof frame part (7) is forwardly rotated the rear roof part (6) will rotate to the rear in the direction of the vehicle in order to enable retraction of the vehicle roof (3).

8. A retractable roof-rear construction (2) according to claim 1, **characterized in that** the front roof part (5) is rotatably coupled with the roof frame part (7) in such a way that when the roof frame part (7) is rotated forwardly and consequently the front roof part (5) rotates forwardly after the rear rotation of the rear roof part (6) in order to rest on the side wall above the rear roof part (6) in the retracted state and to enable a retraction of the motor vehicle roof (3).

9. A retractable roof-rear construction (2) according to claim 1, **characterized in that** an outer surface area of the front roof part (5) delimits the passenger compartment or stowage space both in the retracted and also in the non-retracted state.

10. A retractable roof-rear construction (2) according to claim 1, **characterized in that** the front roof part (5) rests in the retracted state on the rear side wall, so that a cover of the rear row of seats and/or the stowage space is realized.

11. A retractable rear-roof construction (2) according to claim 1, **characterized in that** in the retracted state the roof frame part (7), the rear roof part (6), the front roof part (5) and the bottom rear part (9) form a stowage space which can be accessed by opening the bottom rear part (9).

12. A retractable rear-roof construction (2) according to claim 1, **characterized in that** the rear roof part (6) is arranged with respect to its width at least partly in a narrower fashion than the front roof part in order to be arranged in the retracted state at least partly in a respective manner between the opposite wheelhouses and/or side walls beneath the front roof part.

13. A retractable rear-roof construction (2) according to claim 1, **characterized in that** the rear roof part (6) is arranged with respect to its width in a tapering manner in the direction of the rear (4) of the vehicle in order to be arranged in the retracted state between the opposite side walls in the direction of the front of the vehicle.

14. A retractable rear-roof construction (2) according to claim 1, **characterized in that** the front roof part (5) is arranged with respect to its width at least partly wider than the rear roof part in order to rest in the retracted state on the opposite respective side walls.

15. A retractable rear-roof construction (2) according to claim 1, **characterized in that** the front roof part (5) is arranged with respect to its width in the direction of the rear (5) of the vehicle at least partly in a tapering manner in order to rest in the retracted state on the opposite respective side walls in the direction of the front of the vehicle.

16. A retractable rear-roof construction (2) according to claim 1, **characterized in that** the vehicle roof (3) and/or the side walls are arranged in an inclined manner relative to a vehicle base in the direction of the rear (4) of the vehicle.

17. A retractable rear-roof construction (2) according to claim 3, **characterized in that** an actuating apparatus is provided which cooperates with a joint device (10, 11, 12, 13) for retracting or extending the roof-rear construction (2).

18. A convertible motor vehicle (1), comprising:
a passenger compartment which is at least partly enclosed by a vehicle body and comprises at least one row of seats and a stowage space arranged behind the row of seats and a retractable roof-rear construction (2) according to one of the claims 1 to 17.

19. A convertible motor vehicle (1) according to claim 18,
**characterized in that** the motor vehicle is arranged in the manner of a convertible or roadster when the vehicle roof (3) is retracted.

20. A convertible motor vehicle (1) with a roof-rear
construction (2) according to claim 1, **characterized in that** the motor vehicle (1) is arranged in the manner of a station wagon or a sportswagon.

21. A method for converting a motor vehicle (1) arranged as a station wagon into a convertible and vice versa, comprising a roof-rear construction (2) according to one of the claims 1 to 17, comprising the following steps:
folding the rear row of seats;
retracting or extending the roof-rear construction (2).

22. A method according to claim 21, wherein the step of retracting comprises the following steps:
rotating the roof frame part (7) in a direction of rotation in the direction of the front and base of the vehicle;
rotating the rear roof part (6) in a second direction of rotation in opposite direction to the first direction of rotation, and
rotating the front roof part (5) in a first direction of rotation, so that the roof frame part (7), the rear roof part (6) and the front roof part (5) will be arranged in a folded manner in an approximately Z-shaped way.

23. A method according to claim 21, wherein the step of extending comprises the following steps:
rotating the roof frame part (7) in the second direction of rotation in the direction of the rear (4) of the vehicle and against the base of the vehicle;
rotating of the rear roof part (6) in the first direction of rotation in opposite direction to the second direction of rotation, and
rotating the front roof part (5) in the second direction of rotation, so that the roof frame part (7), the rear roof part (6) and the front roof part (5) are arranged in an approximately L-shaped way.

## Revendications

1. Structure de toit et d'arrière escamotable (2) pour un véhicule à moteur (1), comprenant :
une partie avant de toit (5),
une partie arrière de toit (6) couplée à la partie avant de toit (5) et
une partie formant cadre de toit (7) servant de montant du véhicule et couplée à la
partie arrière de toit (6) et à un châssis du véhicule,
ainsi qu'un arrière de véhicule à moteur (4),
dans laquelle des moyens sont prévus pour abaisser au moins des parties de l'arrière du véhicule à moteur (4) et de l'ensemble du toit de véhicule à moteur (3) dans l'état couplé.

2. Structure de toit et d'arrière escamotable (2) selon la revendication 1, **caractérisée en ce que** l'arrière de véhicule à moteur (4) comprend une partie d'arrière supérieure (8) couplée à la partie arrière de toit (6) et une partie d'arrière inférieure (9) pouvant être couplée à la partie d'arrière supérieure (8) et couplée au châssis du véhicule à moteur.

3. Structure de toit et d'arrière escamotable (2) selon la revendication 1, **caractérisée en ce que** les moyens sont conformés comme un dispositif d'articulation (10, 11, 12, 13) pour la disposition avec possibilité de rotation de deux composants voisins de la structure de toit et d'arrière escamotable (2).

4. Structure de toit et d'arrière escamotable (2) selon la revendication 1, **caractérisée en ce que** la partie d'arrière supérieure (8) est couplée de manière fixe avec la partie arrière de toit et/ou avec la partie supérieure de la partie formant cadre de toit (7).

5. Structure de toit et d'arrière escamotable (2) selon la revendication 1, **caractérisée en ce que** la partie d'arrière supérieure (8) est couplée de manière escamotable avec la partie d'arrière inférieure (9).

6. Structure de toit et d'arrière escamotable (2) selon la revendication 1, **caractérisée en ce que** la partie formant cadre de toit (7) est conçue de façon à pouvoir tourner vers l'avant dans le sens du véhicule, afin d'être disposée par-dessus la rangée de sièges arrière rabattue ou renversée dans l'état escamoté et de permettre l'escamotage du toit de véhicule à moteur (3).

7. Structure de toit et d'arrière escamotable (2) selon la revendication 1, **caractérisée en ce que** la partie arrière de toit (6) est couplée avec possibilité de rotation à la partie formant cadre de toit (7) de telle manière que lors de la rotation vers l'avant de la partie formant cadre de toit (7), la partie arrière de toit (6) tourne vers l'arrière dans le sens du véhicule pour permettre l'escamotage du toit de véhicule à moteur (3).

8. Structure de toit et d'arrière escamotable (2) selon la revendication 1, **caractérisée en ce que** la partie avant de toit (5) est couplée avec possibilité de rotation avec la partie formant cadre de toit (7), de telle manière que lors de la rotation vers l'avant de la partie formant cadre de toit (7) et de la rotation vers l'arrière associée de la partie arrière de toit (6), la partie avant de toit (5) tourne vers l'avant, afin de reposer sur la paroi latérale par-dessus la partie arrière de toit (6) dans l'état escamoté et de permettre l'escamotage du toit de véhicule à moteur (3).

9. Structure de toit et d'arrière escamotable (2) selon la revendication 1, **caractérisée en ce qu'**une surface extérieure de la partie avant de toit (5) délimite l'habitacle ou l'espace de rangement vers l'extérieur dans l'état escamoté aussi bien que dans l'état non escamoté.

10. Structure de toit et d'arrière escamotable (2) selon la revendication 1, **caractérisée en ce que** la partie avant de toit (5) repose, dans l'état escamoté, sur la paroi latérale arrière, de façon à réaliser une couverture de la rangée de sièges arrière et/ou de l'espace de rangement.

11. Structure de toit et d'arrière escamotable (2) selon la revendication 1, **caractérisée en ce que** dans l'état escamoté, la partie formant cadre de toit (7), la partie arrière de toit (6), la partie avant de toit (5) et la partie d'arrière supérieure (9) forment un espace de rangement accessible par l'ouverture de la partie d'arrière inférieure (9).

12. Structure de toit et d'arrière escamotable (2) selon la revendication 1, **caractérisée en ce que** la partie arrière de toit (6) a une largeur au moins partiellement plus étroite que la partie avant de toit, afin d'être disposée au moins partiellement entre les logements de roue et/ou parois latérales opposés sous la partie avant de toit dans l'état escamoté.

13. Structure de toit et d'arrière escamotable (2) selon la revendication 1, **caractérisée en ce que** la partie arrière de toit (6) a une largeur qui diminue en direction de l'arrière de véhicule à moteur (4), afin d'être disposée entre les parois latérales opposées dans l'état escamoté en direction de l'avant du véhicule à moteur.

14. Structure de toit et d'arrière escamotable (2) selon la revendication 1, **caractérisée en ce que** la partie avant de toit (5) a une largeur au moins partiellement plus grande que la partie arrière de toit, afin de reposer sur les parois latérales opposées correspondantes dans l'état escamoté.

15. Structure de toit et d'arrière escamotable (2) selon la revendication 1, **caractérisée en ce que** la partie avant de toit (5) a une largeur qui diminue au moins partiellement vers l'arrière de véhicule à moteur (4), afin de reposer sur les parois latérales opposées correspondantes dans l'état escamoté en direction de l'avant du véhicule.

16. Structure de toit et d'arrière escamotable (2) selon la revendication 1, **caractérisée en ce que** le toit de véhicule à moteur (3) et/ou les parois latérales sont inclinés par rapport à un plancher de véhicule à moteur en direction de l'arrière de véhicule à moteur (4).

17. Structure de toit et d'arrière escamotable (2) selon la revendication 3, **caractérisée en ce qu'**un dispositif d'actionnement coopérant avec le dispositif d'articulation (10, 11, 12, 13) est prévu pour escamoter ou déployer la structure de toit et d'arrière (2).

18. Véhicule à moteur convertible (1) comprenant un habitacle au moins partiellement délimité par une carrosserie de véhicule à moteur, avec au moins une rangée de sièges et un espace de rangement disposé derrière la rangée de sièges, ainsi qu'une structure de toit et d'arrière escamotable (2) selon l'une des revendications 1 à 17.

19. Véhicule à moteur convertible (1) selon la revendication 18, **caractérisé en ce que** le véhicule à moteur est conformé comme un cabriolet ou un roadster quand le toit de véhicule à moteur (3) est escamoté.

20. Véhicule à moteur convertible (1) avec une structure de toit et d'arrière (2) selon la revendication 1, **caractérisé en ce que** le véhicule à moteur (1) est conformé comme un break ou une voiture de sport quand le toit de véhicule à moteur (3) est déployé.

21. Procédé pour convertir un véhicule à moteur (1) conçu comme un break en cabriolet et vice versa avec une structure de toit et d'arrière (2) selon l'une des revendications 1 à 17, comprenant les étapes suivantes :
rabattage de la rangée de sièges arrière
abaissement ou déploiement de la structure de toit et d'arrière (2).

22. Procédé selon la revendication 21, dans lequel l'étape d'abaissement comprend les étapes suivantes :
rotation de la partie formant cadre de toit (7) dans un sens de rotation en direction de l'avant du véhicule et du plancher du véhicule à moteur,
rotation de la partie arrière de toit (6) dans un deuxième sens de rotation opposé au premier sens de rotation et
rotation de la partie avant de toit (5) dans un premier sens de rotation, de telle sorte que la partie formant cadre de toit (7), la partie arrière de toit (6) et la partie avant de toit (5) soient repliées approximativement en forme de Z.

23. Procédé selon la revendication 21, dans lequel l'étape de déploiement comprend les étapes suivantes :
rotation de la partie formant cadre de toit (7) dans le deuxième sens de rotation en direction de l'arrière de véhicule à moteur (4) et dans le sens opposé au plancher du véhicule à moteur,
rotation de la partie arrière de toit (6) dans le premier sens de rotation opposé au deuxième sens de rotation et
rotation de la partie avant de toit (5) dans le deuxième sens de rotation, de telle sorte que la partie formant cadre de toit (7), la partie arrière de toit (6) et la partie avant de toit (5) soient disposées approximativement en forme de L.
